# EUROPEAN PATENT APPLICATION

(11) **EP 2 688 050 A1**
(43) Date of publication of application: **22.01.2014**
(21) Application number: 12305870.3
(22) Date of filing: 18.07.2012
(51) Int. Cl.: G07F 7/10, G07F 7/08, G07C 9/00

(54) **Method for authenticating a user of a contactless chip card**

(71) Applicant: Gemalto SA, 92190 Meudon (FR)
(72) Inventor: Gaston, Lorenzo, 13705 LA CIOTAT (FR)

(57) **Abstract**

A method is intended for authenticating a user of a contactless chip card (CC) by means of a contactless card reader (CR). This method comprises the steps of: (i) using this contactless card reader (CR) for acquiring a first image of at least a part of the user hand that holds it (CC) when it is presented to this contactless card reader (CR), (ii) comparing this first image with a second image stored into this contactless chip card (CC), this second image defining a reference image of at least this part of the user hand when it holds the contactless chip card (CC), to determine if this first image is similar to this second image, and (iii) authenticating this user if this first image is effectively similar to this second image. The biometric characteristics being analyzed are the veins of the hand.

## Description

### Technical field

The present invention relates to the authentication of users of contactless chip cards. One means here by "contactless chip card" a card comprising an electronic chip capable of exchanging data with a contactless card reader in front of which it is presented. Any contactless technique known by a man skilled in the art can be used for this data exchange, and notably the so called "near field communication" (or NFC). So, it may be also a smart card or an integrated circuit card.

### Background of the invention

A contactless chip card is an electronic device that must be presented by its user in front of a contactless card reader to trigger a fast user authentication. Usually, a first user hand holds the contactless chip card and positions it in front of a dedicated area of the contactless card reader, while the second user hand types a PIN code or must be positioned in another area for acquisition (or capture) of a fingerprint or flat shape. So, the two hands are required to proceed to the user authentication, which is almost always inconvenient. Indeed, when, for instance, the user is carrying a bag or luggage or driving a vehicle and must pay in a toll facility, he must drop his bag or luggage or stop his vehicle to present his second hand for authentication, which takes time while contactless chip cards have been essentially conceived for shortening authentication time when people are queuing.

In order to free the second hand, it has been proposed to use other passive biometric analysis instead of the fingerprint or flat hand shape acquisition. For instance, a picture of the user face or a user eye may be acquired (or captured). But these acquisitions require a precise positioning of the head in front of a biometric camera, which also takes time and is inconvenient when the user is driving a vehicle and/or carries sun glasses. Moreover, providing a face image every time you use your contactless chip card (for instance for paying) may be difficult to accept.

It has been also proposed to add a biometric sensor to the contactless chip card, so that the biometric authentication may be carried out on the hand the user uses for holding his contactless chip card. But, this increases notably the cost of the contactless chip card and requires a precise positioning of at least one finger of the user on the biometric sensor.

### Summary of the invention

So, an objective of the invention is to propose a solution that overcomes, at least partly, the above mentioned drawbacks.

The invention relates to a method for authenticating a user of a contactless chip card by comparison of acquired and stored images of the user hand holding this contactless chip card.

More precisely, the invention provides a method, intended for authenticating a user of a contactless chip card by means of a contactless card reader, and comprising the steps of:
(i) using this contactless card reader for acquiring a first image of at least a part of the user hand that holds this contactless chip card when it is presented to it,
(ii) comparing this first image with a second image stored into this contactless chip card, said second image defining a reference image of at least this part of the user hand when it holds said contactless chip card, to determine if this first image is similar to said second image, and
(iii) authenticating the user if this first image is effectively similar to this second image.

The invention enables to use the shape of the hand, or of the fist, or a particular disposition of the hand when grabbing and positioning the card when presenting a contactless card to reader. This leads to use a new biometrics modality.

Advantageously the shape of the fist when carrying the card is captured, digitalized and transmitted to the card to proceed to a verification on card. The second image can also be transferred to the card reader that performs the comparison with the captured first image. The second image is a reference image that is preferably captured in equivalent conditions than the ones encountered when capturing the first image.

The method according to the invention may include additional characteristics considered separately or combined, and notably:
- in step (i) one may use the contactless card reader for acquiring a first image of at least a part of the fist of the user hand that holds the contactless chip card; this feature enables to use the fist proportions, shape and visual characteristics. This enlarges the quantity of data that can be compared, thus:
   z in step (ii) one may compare a shape of the fist part with a corresponding shape that is present into the second image;
- in step (ii) one may compare veins appearing into the first image with corresponding veins present into the second image; this last feature is particularly interesting as the vein pattern is fixed and different from one person to another one;
- in step (ii) one may output a comparison result that is representative of similarities between the first and second images, and in step (iii) one may authenticate the user if this comparison score is above a predetermined threshold;
- in step (i) the contactless card reader may transmit data defining the acquired first image to the contactless chip card so that it carries out steps (ii) and (iii). This enables a match-on-card verification.

The invention also provides a contactless chip card comprising a chip arranged for storing data defining a reference image of at least a part of a user hand when it holds this contactless chip card in front of a contactless card reader, and, after having received data defining another image of at least a part of this user hand acquired by the contactless card reader, said chip being also arranged for comparing the stored reference image and the acquired image to determine if this acquired image is similar to this stored reference image, said chip being arranged and for authenticating the user if this acquired image is effectively similar to the stored reference image.

### Brief description of the figures

Other features and advantages of the invention will become apparent upon examining the detailed specifications hereafter and the appended drawings, wherein:
- figure 1 schematically and functionally illustrates an example of contactless chip card according to the invention cooperating with an example of contactless card reader during a user authentication, and
- figure 2 schematically illustrates an example of algorithm implementing an authentication method according to the invention.

### Detailed description of the preferred embodiment

The appended drawings may serve not only to complete the invention, but also to contribute to its definition, if need be.

The invention aims, notably, at offering an authentication method intended for allowing authentications of users of contactless chip cards CC.

The invention concerns any contactless chip card comprising an electronic chip EC capable of exchanging data with contactless card readers, whatever the technique and protocol implemented for the data exchange with such contactless card readers. So, it may be a debit/credit card, an electronic identity card or else an electronic passport, or even a card for access to public transport or private facilities.

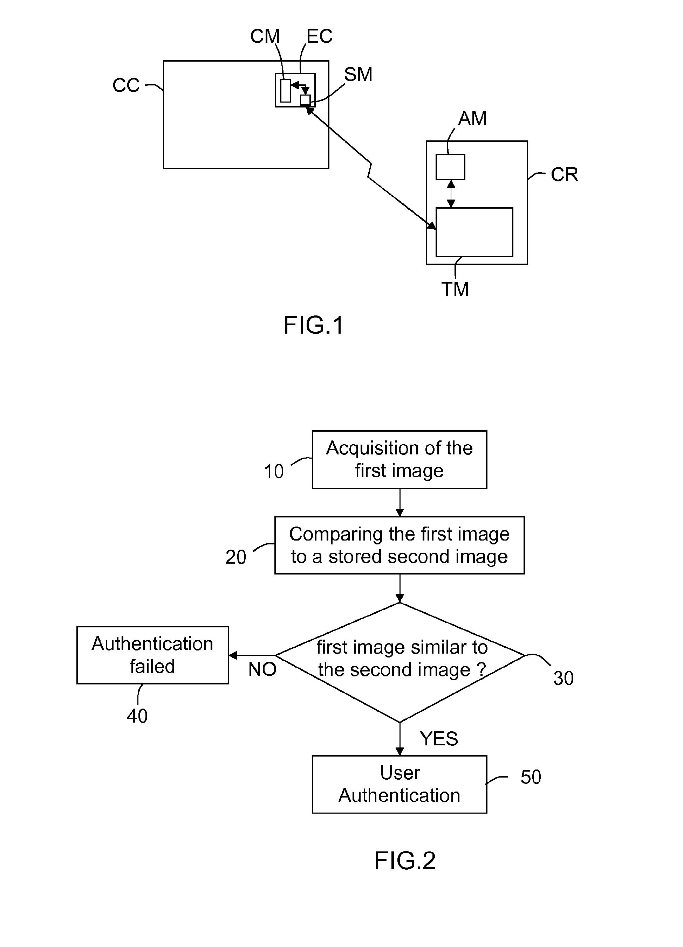

Figure 1 schematically illustrates a contactless chip card CC located in front of a contactless card reader CR for authenticating its user. The user hand that holds the contactless chip card CC has not been drawn for clarity purposes.

The contactless chip card CC comprises an electronic chip EC comprising a storing means SM and a computation means CM. This storing means SM is notably arranged for storing data defining, preferably encoded, a reference image, called second image, of at least a part of the user hand when it holds his contactless chip card CC in front of a contactless card reader CR. This second image is a reference image that has been initially captured and stored during an initialization and registering phase of the contactless chip card CC, usually referred to as user enrollment.

The contactless card reader CR comprises an acquisition means AM and a communication means TM.

The acquisition means AM is arranged for acquiring (or capturing) a first image of at least a part of each user hand holding a contactless chip card CC that is presented to it (AM). For instance, this acquisition means AM is a digital camera.

The invention proposes an authentication method to be implemented by a contactless card reader CR and a contactless chip card CC that is presented in front of this contactless card reader CR.

Such an authentication method comprises three steps (i), (ii) and (iii).

A first step (i) consists in using the contactless card reader CR (to which a contactless chip card CC is presented) to acquire a first image of at least a part of the user hand that holds this contactless chip card CC.

For instance, the acquisition means AM of the contactless card reader CR may acquire a first image of at least a part of the fist of the user hand that holds the contactless chip card CC. But in a variant or in addition, the acquisition means AM of the contactless card reader CR may acquire (or capture) a first image of at least a part of the veins appearing at the surface of the user fist. A part of the veins at the surface of the external face of the user hand can also be used.

A second step (ii) consists in comparing the acquired first image with the second image that is stored into the storing means SM of the contactless chip card CC (and which defines a second image of at least the same part of the user hand when it holds this contactless chip card CC), to determine if this first image is similar to this second image.

For instance, during the second step (ii) one may compare the shape of the fist part with a corresponding shape that is present into the stored second image. For this purpose, the shape of the fist part may be determined into the first image by means of an image processing carried out by a shape recognition means.

The invention offers the advantage to use a mix of a behavioural biometric analysis (that aims at determining the particular way the user holds his contactless chip card CC) and a physiological analysis (that aims at determining the particular shape or vein pattern of a user fist).

As mentioned above, in a variant or in addition, during the second step (ii) one may compare veins that appear into the acquired first image with corresponding veins that are present into the stored second image.

Because a fist contains a lot of veins close to the skin surface, the capture of its vein pattern, and especially of its colour, may be a proof of the fact that the user is alive. Contrary to fingerprint or flat hand shape recognition, the capture of the fist shape and/or the fist vein pattern does not require any physical contact with the acquisition means AM, so that it appears to be almost impossible to use a fake fist for deluding (or misleading) the authentication process. A vascular image of the external face of the hand can also be used.

A third step (iii) consists in authenticating the user of the presented contactless chip card CC if the acquired first image is effectively similar to the stored second image.

For instance, the second (ii) and third (iii) steps may be carried out by the computation means CM of the electronic chip EC of the contactless chip card CC. In this case, during the first step (i) the contactless card reader CR transmits (digital) data defining the acquired first image to the contactless chip card CC by means of its communication means TM.

But in a variant, the second (ii) and third (iii) steps could be carried out by the contactless card reader CR. In this variant, the contactless chip card CC transmits (digital) data defining the stored second reference image to the contactless card reader CR by means of communication means.

The part of the computation means CM that carries out the whole comparison can be made up of software modules, or of a combination of hardware and software modules.

Also for instance, during the second step (ii) one may output a comparison result that is representative of similarities between the first and second images. This comparison result may be a computed value that may vary between 0 and 1 or 0% and 100%, where 1 or 100% represents the identity between the shape and/or vein pattern of the acquired first image and the corresponding shape and/or vein pattern of the stored second image. In this case, during the third step (iii) one may authenticate the user if the comparison result (obtained during the second step (ii)) is above a predetermined threshold (for instance equal to 0,8 or 0,85 or else 80% or 85%)

An example of algorithm that implements the authentication method described above is schematically illustrated in figure 2.

This algorithm starts with a step 10 during which the contactless card reader CR acquires a first image of at least a part of the user hand that holds a contactless chip card CC presented to its acquisition means AM. This step 10 is the first step (i) of the authentication method.

The algorithm follows with a step 20 during which the acquired first image is compared with the second reference image stored into the presented contactless chip card CC. This comparison step can take place in either the card or the contactless reader. Then the algorithm follows with a step 30 during which the comparison result is analysed to decide whether this acquired first image is similar enough to the stored second reference image. These steps 20 and 30 define together the second step (ii) of the authentication method.

Then the algorithm ends either with a step 40 during which the acquired first image is considered as not similar enough to the stored second image, which means that the authentication has failed, or with a step 50 during which the acquired first image is considered as similar to the stored second image, which means that the authentication has succeed (and therefore a door may be open or a transaction may be initiated, for instance). Step 40 or 50 is the third step (iii) of the authentication method.

The invention offers several advantages, amongst which:
- a convenient and fast way to authenticate a card user in action (i.e. holding and presenting its contactless chip card) while keeping the second hand free,
- an unobtrusive way to authenticate a card user without he knew that such an authentication is carried out.

This biometrics is also difficult to forge and thus provides a guarantee that the biometrics is actually captured just before the verification takes place.

The invention is not limited to the embodiments of authentication method and contactless chip card described above, only as examples, but it encompasses all alternative embodiments which may be considered by one skilled in the art within the scope of the claims hereafter.

## Claims

1. Method for authenticating a user of a contactless chip card (CC) by means of a contactless card reader (CR), **characterized in that** it comprises the steps of: (i) using said contactless card reader (CR) for acquiring a first image of at least a part of the user hand that holds said contactless chip card (CC) when it is presented to it (CR), (ii) comparing said first image with a second image stored into said contactless chip card (CC), said second image defining a reference image of at least said part of the user hand when it holds said contactless chip card (CC), to determine if said first image is similar to said second image, and (iii) authenticating said user if said first image is effectively similar to said second image.

2. Method according to claim 1, **characterized in that** in step (i) one uses said contactless card reader (CR) for acquiring a first image of at least a part of the fist of the user hand that holds said contactless chip card (CC).

3. Method according to claim 2, **characterized in that** in step (ii) one compares a shape of said fist part with a corresponding shape that is present into said second image.

4. Method according to one of claims 1 to 3, **characterized in that** in step (ii) one compares veins appearing into said first image with corresponding veins present into said second image.

5. Method according to one of claims 1 to 4, **characterized in that** in step (ii) one outputs a comparison result that is representative of similarities between said first and second images, and in step (iii) one authenticates said user if said comparison result is greater than a predetermined threshold.

6. Method according to one of claims 1 to 5, **characterized in that** in step (i) said contactless card reader (CR) transmits data defining said acquired first image to said contactless chip card (CC) so that it carries out said steps (ii) and (iii).

7. Contactless chip card (CC) for a user, **characterized in that** said chip is arranged for storing data defining a reference image of at least a part of a user hand when it holds said contactless chip card (CC) in front of a contactless card reader (CR), and, after having received data defining another image of at least a part of said user hand acquired by a contactless card reader (CR), said chip being also arranged for comparing the stored reference image and the acquired image therebetween to determine if said acquired image is similar to said stored image, and (iii) authenticating said user if said acquired image is effectively similar to said stored image.
